# FASCICULE DE BREVET EUROPEEN

(11) **EP 2 231 525 B1**
(45) Date de publication et mention de la délivrance du brevet: **05.10.2011**
(21) Numéro de dépôt: 08860015.0
(22) Date de dépôt: 16.05.2008
(51) Int. Cl.: C01G 49/00, B01J 21/04, B01J 23/72, B01J 23/745, F23C 13/00

(54) **UTILISATION D'UNE MASSE OXYDO-REDUCTRICE A STRUCTURE DE TYPE SPINELLE POUR UN PROCEDE D'OXYDO-REDUCTION EN BOUCLE**
VERWENDUNG EINER REDOX-MASSE MIT SPINELLARTIGER STRUKTUR FÜR EIN REDOXSCHLEIFENVERFAHREN
USE OF A REDOX MASS HAVING A SPINEL TYPE STRUCTURE FOR A LOOPING REDOX PROCESS

(30) Priorité: 10.12.2007 FR 0708640
(43) Date de publication de la demande: 29.09.2010
(73) Titulaire: IFP Energies nouvelles, 92852 Rueil-Malmaison Cedex (FR)
(72) Inventeur: LAMBERT, Arnold, F-42410 Chavanay (FR)
(86) Numéro de dépôt international: PCT/FR2008/000696
(87) Numéro de publication internationale: WO 2009/074729

(56) Documents cités:
- EP-A- 1 747 813
- P.J.M. VAN DER STRATEN, R. METSELAAR: "Lpe growth of Mn-, Ni- and Al- substituted copper ferrite films" JOURNAL OF APPLIED PHYSICS, vol. 51, no. 6, juin 1980 (1980-06), pages 3236-3240, XP002465125
- F.JE, H. WANG, Y. DAI: "Application of Fe2O3/Al203 composite particles as oxygen carrier for chemical looping combustion" JOURNAL OF NATURAL GAS CHEMISTRY, vol. 16, février 2007 (2007-02), pages 155-161, XP002465126

## Description

### Domaine de l'invention

La présente invention concerne l'utilisation d' un nouveau type de masse active oxydo-réductrice dans les procédés CLC ou "chemical looping combustion" dans la terminologie anglo-saxonne, le terme "chemical looping" faisant référence à un procédé d'oxydo-réduction en boucle sur masse active.

Le domaine de la présente invention est celui de la production d'énergie, des turbines à gaz, des chaudières et des fours, notamment pour l'industrie pétrolière, verrière et des cimenteries. Il couvre également l'utilisation de ces moyens pour la production d'électricité, de chaleur ou de vapeur.

Le domaine de l'invention regroupe plus particulièrement les dispositifs et les procédés permettant, par la mise en oeuvre de réactions d'oxydo-réduction d'une masse active, dite masse d'oxydo-réduction, de produire un gaz chaud à partir d'un hydrocarbure, par exemple le gaz naturel, les charbons ou les résidus pétroliers, ou d'un mélange d'hydrocarbures, et d'isoler le dioxyde de carbone produit de façon à pouvoir le capturer.

La croissance de la demande énergétique mondiale conduit à construire de nouvelles centrales thermiques et à émettre des quantités croissantes de dioxyde de carbone préjudiciables à l'environnement. La capture du dioxyde de carbone en vue de sa séquestration est ainsi devenue une nécessité incontournable.

Une des techniques pouvant être utilisées pour capturer le dioxyde de carbone consiste à mettre en oeuvre des réactions d'oxydo-réduction d'une masse active dans un procédé CLC. Une première réaction d'oxydation de la masse active avec de l'air ou un autre gaz jouant le rôle de comburant, permet, du fait du caractère exothermique de l'oxydation, d'obtenir un gaz chaud dont l'énergie peut ensuite être exploitée. Une seconde réaction de réduction de la masse active oxydée à l'aide d'un gaz, d'un liquide ou d'un solide réducteur permet ensuite d'obtenir une masse active réutilisable ainsi qu'un mélange gazeux comprenant essentiellement du dioxyde de carbone et de l'eau.

Un intérêt de cette technique est de pouvoir facilement isoler le dioxyde de carbone dans un mélange gazeux pratiquement dépourvu d'oxygène et d'azote.

### Art antérieur

Le brevet US 5,447,024 décrit un procédé CLC comprenant un premier réacteur de réduction d'une masse active à l'aide d'un gaz réducteur et un second réacteur d'oxydation permettant de restaurer la masse active dans son état oxydé par une réaction d'oxydation avec de l'air humidifié.

La masse active passant alternativement de sa forme oxydée à sa forme réduite et inversement, décrit un cycle d'oxydo-réduction. Il convient de noter que, de manière générale, les termes oxydation et réduction sont utilisés en relation avec l'état respectivement oxydé ou réduit de la masse active. Le réacteur d'oxydation est celui dans lequel la masse oxydo-réductrice est oxydée et le réacteur de réduction est le réacteur dans lequel la masse oxydo-réductrice est réduite.

Les effluents gazeux issus des deux réacteurs sont préférentiellement introduits dans les turbines à gaz d'une centrale électrique. Le procédé décrit dans ce brevet permet d'isoler le dioxyde de carbone par rapport à l'azote, ce qui facilite ainsi la capture du dioxyde de carbone.

Le document cité ci-dessus utilise la technologies du lit circulant pour permettre le passage continu de la masse active de son état oxydé à son état réduit.

Ainsi, dans le réacteur de réduction, la masse active (MₓO_{y}) est tout d'abord réduite à l'état MₓO_{y-2n-+m/2}, par l'intermédiaire d'un hydrocarbure CₙHₘ, qui est corrélativement oxydé en CO₂ et H₂O, selon la réaction (1), ou éventuellement en mélange CO + H₂ selon les proportions utilisées.

CₙHₘ + MₓO_{y} → ₙCO₂+ m/2H₂O + MₓO_{y-2n-m/2} (1)

Dans le réacteur d'oxydation, la masse active est restaurée à son état oxydé (MₓO_{y}) au contact de l'air selon la réaction (2), avant de retourner vers le premier réacteur.

MₓO_{y-2n-m/2} + (n+m/4) O₂ + MₓO_{y} (2)

Le même document revendique comme masse active l'utilisation du couple oxydo-réducteur NiO/Ni, seul ou associé au liant YSZ (qui se définit par zircone stabilisée par l'yttrium, également appelée zircone yttriée).

L'intérêt du liant dans une telle application est d'augmenter la résistance mécanique des particules, trop faible pour une mise en oeuvre en lit circulant lorsque NiO/Ni est utilisé seul. La zircone yttriée étant en outre conductrice ionique des ions O²⁻ aux températures d'utilisation, la réactivité du système NiO/Ni/YSZ s'en trouve améliorée.

De nombreux types de liants en plus de la zircone yttriée (YSZ) déjà citée ont été étudiés dans la littérature, afin d'augmenter la résistance mécanique des particules à un coût moins élevé que l'YSZ. Parmi ceux ci, on peut citer l'alumine, les spinelles d'aluminate métallique, le dioxyde de titane, la silice, la zircone, le kaolin.

L'utilisation de catalyseurs à base de cuivre, fer et alumine est connue dans le procédé CLC (voir F. JE, H. Wang, Y. Dai "Application of Fe2O3/Al2O3 composite particles as oxygen carrier for chemical looping combustion" Journal of Natural Gas Chemistry, vol. 16, février 2007 (2007-02), pages 155-161).

Le document EP 1 747 813 décrit également des masses oxydo-réductrices comprenant un couple ou un ensemble de couples d'oxydo-réduction, choisi dans le groupe formé par CuO/Cu, Cu₂O/Cu, NiO/Ni, Fe₂O₃/Fe₃O₄, FeO/Fe, Fe₃O₄/FeO, MnO₂/Mn₂O₃, Mn₂O₃/Mn₃O₄, Mn₃O₄/lMnO, MnO/Mn, Co₃O₄/CoO, CoO/Co en association avec un liant de type cérine-zircone permettant d'augmenter la capacité de transfert d'oxygène desdites masses.

La réactivité des masses oxydo-réductrices mises en jeu dans l'application CLC est essentielle : plus les réactions d'oxydation et de réduction sont rapides, moins l'inventaire en matériaux nécessaires au fonctionnement d'une unité est important. D'après la littérature (T.Mattison, A.Jardnas, A,Lyngfelt, Energy & Fuels 2003, 17, 643), le couple CuO/Cu présente les vitesses de réduction et d'oxydation les plus élevées, devant le couple NiO/Ni. Les auteurs notent toutefois que la température de fusion relativement faible du cuivre (1083°C) limite son potentiel d'utilisation en CLC à haute température, et la majorité des études publiées sur les masses oxydo-réductrices pour la CLC concernent le couple NiO/Ni, malgré sa toxicité importante (celui-ci étant classé CMR1) et son coût élevé.

L'utilisation du couple Fe₂O₃/Fe₃O₄ est également intéressante par rapport à celle du couple NiO/Ni, malgré une faible capacité de transfert d'oxygène, et en raison de sa faible toxicité et de son faible coût. Néanmoins, comme Fe₃O₄ a tendance à se réduire en FeO. les vitesses d'oxydation et de réduction associées sont réduites.

En ce qui concerne plus particulièrement l'utilisation du cuivre dans les masses oxydo-réductrices, une publication dans Fuel 83 (2004) 1749 de Diego, Garcia-Labiano et col., montre l'utilisation du cuivre en CLC, le cuivre étant déposé par imprégnation sur un support poreux (alumine, silice, titane, zircone ou sépiolite), avec pour conséquence une limitation significative de la quantité de cuivre utilisable et donc de la capacité de transfert d'oxygène de la masse active. Cette publication précise que les solides préparés par co-précipitation ou par mélange mécanique d'oxydes avec une teneur élevée en CuO ne sont pas utilisables dans les procédés CLC.

D'autre part, une autre publication de ces auteurs (L.F. de Diego, P. Gayan, F. Garcia-Labiano, J. Celaya, A. Abad. J. Adanez, Energy & Fuels 2005,19. 1850) divulgue qu'un taux d'imprégnation de 10% de CuO sur alumine permet d'éviter une agglomération des particules néfaste au fonctionnement du procédé en lit fluidisé mais que ce phénomène d'agglomération est inévitable dès lors que 20% de CuO sont imprégnés.

Le phénomène d'agglomération des particules, qui peut compromettre l'utilisation de masses oxydo-réductrices en lit fluidisé, a également été étudié par P. Cho, T. Mattison, A. Lyngfedt dans la revue Fuel, 83, (2004), 1215 pour des masses oxydo-réductrices comprenant 60% de CuO, Fe₂O₃. NiO ou Mn₃O₄ et 40% d'alumine utilisée en tant que liant. Ils montrent que les particules à base de fer et de cuivre s'agglomèrent, contrairement à celles à base de Ni et de Mn.

D'une manière générale, la réaction d'un métal (M) à l'état d'oxydation +II (MO) avec l'alumine conduit, aux températures de fonctionnement des procédés CLC, à la formation d'un spinelle (MAl₂O₄). Le spinelle NiAl₂O₄ est peu réactif et selon Cho et al. (Ind. Eng. Chem. Res. 2005, 44, 668), les spinelles CuAl₂O₄ et MinAl₂O₄ ne le sont pas non plus. Afin d'éviter la baisse de capacité de transfert d'oxygène induite par la formation par réaction de MO avec Al₂O₃, le spinelle lui-même peut être utilisé comme liant, mais ceci implique un surcoût du fait de l'introduction de métal non réactif.

La publication "Lpe growth of Mn-, Ni-, and Al- substituted copper ferrite films", Journal of Applied Physics, vol.51, n°6. juin 1980, pages 3236-3240 (P.J.M. Van der Straten, R.Metselaar) décrit un composé Cu_{0.95}Fe_{2.05}AlO₄ La fiche JCPDS 04-006-4618 pour le produit Cu_{0.95}Fe_{1.05}AlO₄ fait référence à cette publication.

La demanderesse a découvert de façon inattendue, que l'utilisation dans l'application CLC d'une masse oxydo-réductrice d'un type particulier permettait de pallier les inconvénients liés au coût, à la toxicité et à l'agglomération des particules compromettant l'utilisation en lit fluidisé, tout en présentant une capacité de transfert d'oxygène importante et des vitesses d'oxydation et de réduction améliorées.

### Description détaillée de l'invention

La présente invention concerne l'utilisation d'un nouveau type de masse active dans les procédés d'oxydo-réduction en boucle.

Plus précisément, l'invention concerne une masse active d'oxydo-réduction contenant un spinelle répondant à la formule Cu₁₋ₓFe₁₊ₓAlO₄ avec 0≤x≤0,

Le groupe des spinelles est constitué des oxydes dont la structure reproduit celle du spinelle minéral MgAl₂O₄. Parmi les oxydes présentant une structure spinelle figurent de nombreux composés naturels, telle la magnetite (Fe₃O₄), la chromite (FeCr₂O₄), la gahnite (ZnAl₂O₄). La formule générale des spinelles est AB₂O₄, où A est un cation bivalent et B un cation trivalent. Dans la structure spinelle, les ions oxyde (O²⁻) forment un réseau cubique à faces centrées. Ce réseau possède deux sortes de sites interstitiels: des sites tétraédriques et des sites octaédriques. La maille primitive cubique du réseau spinelle possède en particulier 64 sites tétraédriques, dont 8 seulement sont occupés par des ions métalliques, et 32 sites octaédriques, dont 16 sont occupés. Deux types d'arrangements particuliers des cations ont été observés. Dans les spinelles de type normal, les ions trivalents occupent les sites octaédriques et les ions bivalents occupent les sites tétraédriques. Chaque ion oxyde est ainsi réuni à un ion bivalent et à trois ions trivalents. Dans les spinelles de type inverse, les sites tétraédriques sont occupés par la moitié des ions trivalents et les sites octaédriques par l'autre moitié des ions trivalents et par les ions divalents. Il existe également des spinelles où les deux types de cations occupent à la fois les sites tétra et octaédriques: ce sont des spinelles mixtes dont les deux cas précédents sont les cas limites (SMIT et WIJN, Les Ferrites, Techn. Philipps, 1961).

Les oxydes de structure spinelle peuvent être préparés par la méthode de frittage communément utilisée par l'industrie des céramiques. Cette méthode comprend les opérations suivantes. Les oxydes métalliques, carbonates ou autres composés à partir desquels le spinelle sera formé à l'issue d'une réaction à l'état solide, sont mélangés de manière homogène, puis humidifiés et broyés. Après séchage, et éventuellement mise en forme par pressage, la poudre obtenue est portée à une température suffisante (environ 1000°C) pour provoquer la réaction chimique entre les réactifs. Pour améliorer l'homogénéité au sein de la structure du matériau, la poudre obtenue peut être broyée et mélangée à nouveau, puis portée à haute température. Ces opérations peuvent être répétées autant de fois que nécessaire.

La synthèse du spinelle peut également être réalisée par la méthode dite selon les termes anglophones "solution combustion synthesis", où un mélange stoechiométrique de précurseurs métalliques (nitrates, acétates, oxalates...) du spinelle voulu et d'un combustible soluble dans l'eau, de l'urée par exemple, est chauffé jusqu'à l'ignition du mélange.

Le spinelle peut encore être préparé par imprégnation d'un oxyde, par exemple l'alumine, avec un précurseur métallique (nitrate, acétate, oxalate...), suivie d'une calcination à une température suffisante pour la formation du spinelle, typiquement à une température supérieure à 600°C. On obtient ainsi un matériau composite constitué à coeur de l'oxyde support (Al₂O₃) et en périphérie du spinelle (MAl₂O₄).

De manière préférée, la synthèse du spinelle est effectuée par co-précipitation d'un mélange de précurseurs métalliques choisis dans le groupe des nitrates, acétates et oxalates par une base. Cette base est, par exemple, la soude, la potasse ou l'ammoniaque. Le précipité obtenu est ensuite lavé, séché et calciné à une température suffisante pour favoriser la formation du spinelle, de préférence au delà de 600°C.

La demanderesse a découvert que la mise en oeuvre dans un procédé de type CLC d'une masse active d'oxydo-réduction contenant un spinelle CU₁₋ₓFe₁₊ₓAlO₄ avec 0≤x≤0,1, défini ci-dessus permettait de disposer d'une masse à bas coût de revient et à faible niveau de toxicité comparativement aux masses à base de nickel.

De plus, la masse active selon l'invention présente une capacité de transfert d'oxygène importante et des vitesses d'oxydation et de réduction élevées.

La masse oxydo-réductrice peut se présenter sous forme de poudre, de billes, d'extrudés ou de revêtement (appelé "washcoat" dans la terminologie anglo-saxonne) déposé sur un substrat de type monolithe.

De préférence, aucun liant n'est associé à la masse oxydo-réductrice car celui-ci a un impact négatif sur la capacité de transfert en oxygène.

La masse oxydo-réductrice selon l'invention peut néanmoins être utilisée en association avec un liant, et/ou avec un couple ou un ensemble de couples d'oxydo-réduction, choisi dans le groupe formé par CuO/Cu, Cu₂O/Cu, NiO/Ni, Fe₂O₃/Fe₃O₄, FeO/Fe, Fe₃O₄/FeO, MnO₂/Mn₂O₅, Mn₂O₃/Mn₃O₄, Mn₃O₄/MnO, MnO/Mn, Co₃O₄/CoO, CoO/Co.

Lorsqu'un liant est utilisé, celui-ci contient préférentiellement de la cérine-zircone qui est soit utilisée seule, soit en mélange avec d'autres types de liants comme l'alumine, les aluminates de type spinelle, la silice, le dioxyde de titane, le kaolin, l'YSZ, les perovskites. De préférence, les liants autre que la cérine-zircone sont choisis dans le sous-groupe formé par l'alumine, les aluminates, l'YSZ et les perovskites.

La proportion de liant dans la masse d'oxydo-réduction varie entre 10 et 95% poids, préférentiellement entre 20% et 80% poids, et de manière encore préférée entre 30% et 70% poids. Avantageusement, un liant est un oxyde mixte contenant de la cérine-zircone (Ce/Zr), de formule générale CeₓZr₁₋ₓO₂, avec x compris entre 0,05 et 0,95, et préférentiellement x compris entre 0,5 et 0,9.

L'utilisation de la masse d'oxydo-réduction selon la présente invention pourra se faire selon les applications en lit circulant, en réacteur rotatif, ou en réacteur rotatif simulé, telles que décrites dans les demandes de brevet français FR 2846710 et FR 2873750.

### EXEMPLE

Dans cet exemple, on compare les performances d'une masse d'oxydo-réduction selon l'art antérieur décrite dans le document US 5,447,024 et de 5 masses d'oxydo-réduction (échantillons) selon la présente invention, répondant à la formule Cu₁₋ₓFe₁₋ₓAlO₄ avec 0≤x≤0,1 et pour lesquelles x=0,1; 0,075; 0,05; 0,025; 0.

Cet exemple est accompagné des figures suivantes:
Figure 1: évolution de la masse de l'échantillon selon l'art antérieur en fonction de l'atmosphère réductrice ou oxydante, à 900°C.
Figure 2: évolution de la masse de l'échantillon selon l'invention pour lequel x=0,1 en fonction de l'atmosphère réductrice ou oxydante, à 900°C.
Figure 3: évolution de la masse de l'échantillon selon l'invention pour lequel x=0,075 en fonction de l'atmosphère réductrice ou oxydante, à 900°C.
Figure 4: évolution de la masse de l'échantillon selon l'invention pour lequel x=0,05 en fonction de l'atmosphère réductrice ou oxydante, à 900°C.
Figure 5: évolution de la masse de l'échantillon selon l'invention pour lequel x=0,025 en fonction de l'atmosphère réductrice ou oxydante, à 900°C.
Figure 6: évolution de la masse de l'échantillon selon l'invention pour lequel x=0 en fonction de l'atmosphère réductrice ou oxydante, à 900°C.

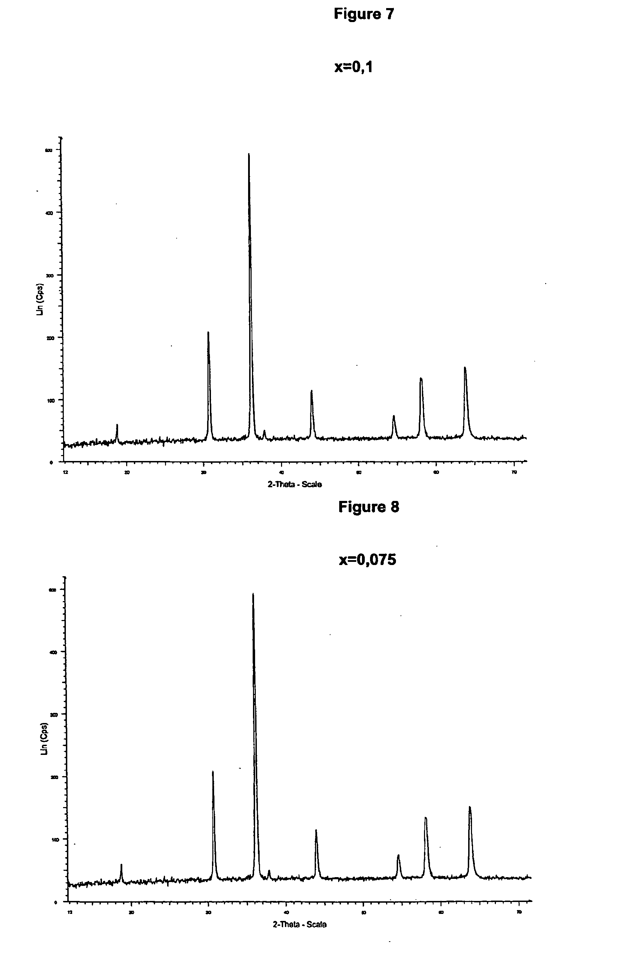

Figure 7: diffractogramme de l'échantillon selon l'invention pour lequel x=0,1.
Figure 8: diffractogramme de l'échantillon selon l'invention pour lequel x=0,075.

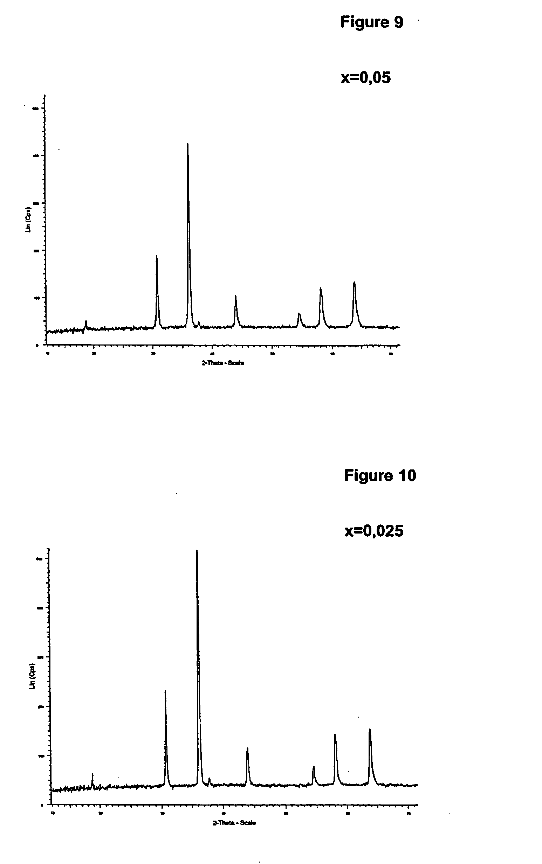

Figure 9: diffractogramme de l'échantillon selon l'invention pour lequel x=0,05.
Figure 10: diffractogramme de l'échantillon selon l'invention pour lequel x=0,025,

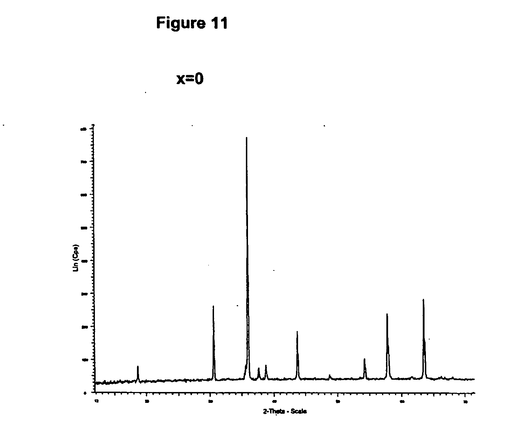

Figure 11: diffractogramme de l'échantillon selon l'invention pour lequel x=0.
Figure 12: : Clichés MEB de la masse oxydo-réductrice selon l'invention avant (a) et après test (b) pour le spinelle correspondant à la formule Cu_{0,95}Fe_{1,05}AlO₄ (x=0,05).
   - La masse d'oxydo-réduction selon l'art antérieur est un oxyde de nickel NiO utilisant comme liant une solution de zircone yttriée préparée de la manière suivante :

On mélange Ni(NO₃)₂, Y(NO₃)₃ et ZrO(NO₃)₂ en solution aqueuse, puis on ajoute de la soude jusqu'à pH 8, à température ambiante. Le précipité formé est ensuite filtré, séché et calciné à 1000°C pendant 2h, pour obtenir un matériau comprenant 60 % massique de NiO, et une solution solide (confirmée par diffraction des rayons X) de zircone stabilisée à l'yttrium, contenant 84 % massique de zircone et 16 % d'yttrine (soit une zircone yttriée à 9% molaire en Y₂O₃).

La capacité de transfert d'oxygène, calculée en considérant que seul le couple NiO/Ni peut être réduit et oxydé selon l'équilibre (3), est de 12,.85% massique.

NiO↔ Ni +½ O₂ (3)

Les masses d'oxydo-réduction selon l'invention sont préparées par précipitation à la soude à température ambiante d'un mélange de nitrate de cuivre, nitrate de fer et nitrate d'aluminium dans les proportions stoechiométriques pour former le spinelle Cu₁₋ₓFe₁₊ₓAlO₄ (x=0,1, 0,075, 0,05, 0,025 et 0). Le précipité formé est ensuite filtré, lavé à l'eau distillée, séché et calciné à 1000°C pendant 2h. Les diffractogrammes des rayons X des poudres obtenues pour x= 0,1, 0,075, 0,05 et 0,025 confirment la formation de spinelles. Pour le spinelle CuFeAlO₄ (x=0), de la ténorite (CuO) est détectée.

Les solides synthétisés sont testés sans mise en oeuvre de liant.

La capacité de transfert d'oxygène théorique des 5 spinelles Cu₁₋ₓFc₁₋ₓAlO₄, calculée en considérant que seuls les couples CuO/Cu et Fe₂O₃/Fe₃O₄ peuvent être réduits et oxydés selon les équilibres (4) et (5) est respectivement de 9,67, 9,79, 9,91, 10,03 et 10,14% massique pour x=0.1: 0,075: 0.05: 0,025 et 0.

CuO ↔ Cu + ½ O₂ (4)

3 Fe₂O₃ ↔ 2 Fe₃O₄ + ½ O₂ (5)

Une thermobalance SETARAM a été équipée d'un automate d'alimentation en gaz permettant de simuler les étapes de réduction et d'oxydation successives vues par les particules dans un procédé de type CLC.

Les tests sont réalisés à une température de 900°C, avec 65mg (± 2mg) d'échantillon contenu dans une nacelle en Pt. Afin de permettre une comparaison entre les différents échantillons La distribution en taille des particules est sélectionnée entre 30 et 40 µm par tamisage. Le gaz de réduction utilisé est composé à 10% de CH₄, 25% de CO₂ et 65% de N₂, et le gaz d'oxydation est l'air sec.

Pour des raisons de sécurité, un balayage à l'azote des fours de la thermobalance est réalisé systématiquement entre les étapes d'oxydation et de réduction,

Pour chaque échantillon, cinq cycles de réduction/oxydation successifs sont réalisés selon le protocole suivant:
1) montée en température sous air (50ml/min).,
   de 20°C à 800°C : 40°C/min
   de 800 à 900°C: 5°C/min
2) Balayage à l'azote pendant 5min15s, débit 80ml/min
3) injection d' un mélange CH₄/CO₂ pendant 20min, à 50ml/min
4) balayage à l'azote 5min15s
5) injection d'air, 20min, 50ml/min

Les étapes 2 à 5 sont ensuite répétées quatre fois supplémentaires, à 900°C.

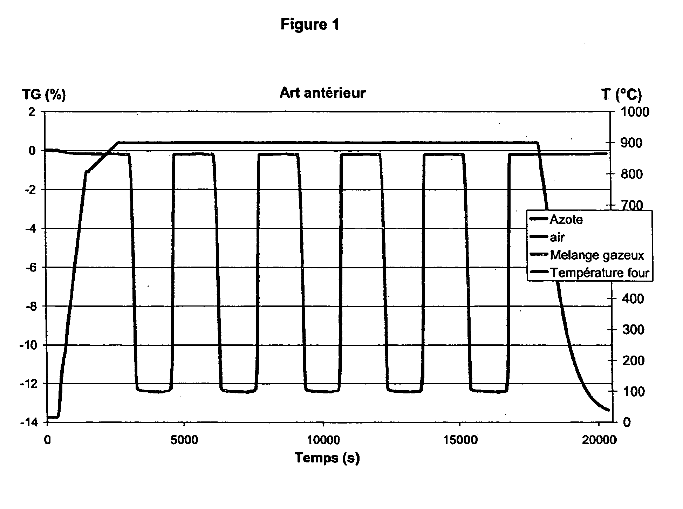

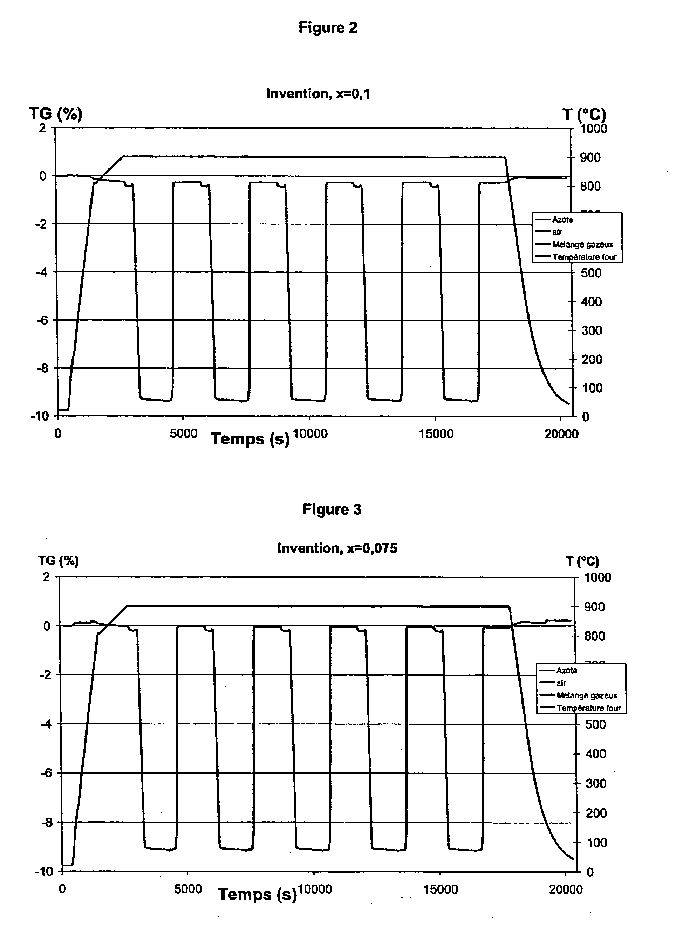

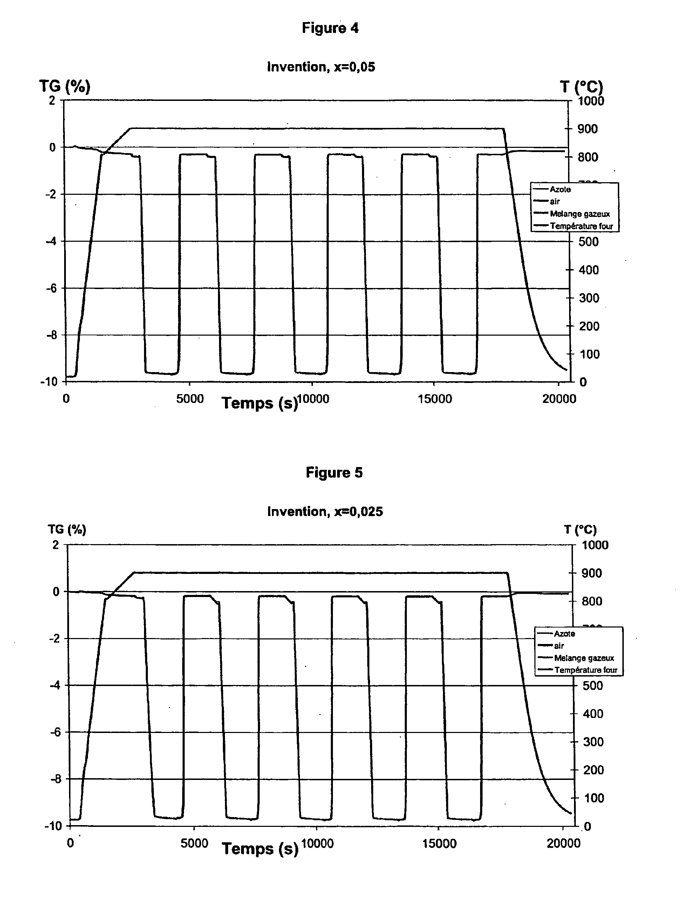

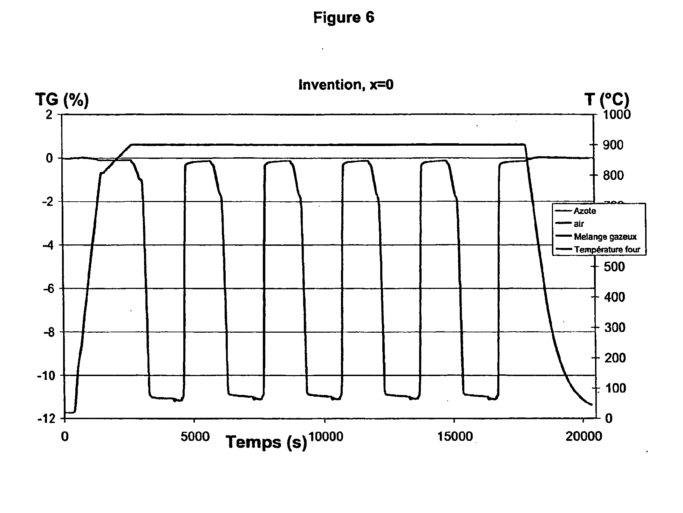

Les résultats obtenus pour la masse de l'art antérieur et les masses selon l'invention sont rassemblés respectivement sur les figures 1 à 6. Sur ces figures est représentée l'évolution de la perte et de la reprise de poids relative de l'échantillon en fonction du temps pour 5 cycles de réduction/oxydation successifs. En accord avec le protocole décrit précédemment, la nature des gaz utilisés varie au cours du déroulement de chaque cycle.

**tableau 1 : moyenne des pertes et gains de masse observés à la réduction et à l'oxydation (respectivement) par les masses oxydo-réductrices selon l'art antérieur et selon l'invention.**

| | art antérieur | invention | | | | |
|---|---|---|---|---|---|---|
| | | x=0 | x=0,025 | x=0,05 | x=0.075 | x=0,1 |
| Réduction | -12,23% | -10,88% | -9, 51 % | -9.35% | -9,07% | -9,08% |
| Oxydation | 12,17% | 10.87% | 9,51 % | 9,35% | 9,07% | 9.08% |

La capacité de transfert d'oxygène mesurée des masses oxydo-réductrices selon l'invention et selon l'art antérieur ne varie pratiquement pas d'un cycle à l'autre, sur cinq cycles de réduction/oxydation consécutifs à 900°C. Pour 0≤x≤0.1. cette capacité est très proche et inférieure à la capacité théorique calculée en ne prenant en compte que la réduction de CuO en Cu et de Fe₂O₃ en Fe₃O₄ : il apparaît ainsi que la structure du spinelle ralentit considérablement la cinétique de réduction de Fe₃O₄ en FeO par le méthane.

En ce qui concerne la comparaison des vitesses de réduction et d'oxydation, celle-ci est la suivante:

**tableau 2 : vitesses moyennes de réduction et d'oxydation mesurées**

| | vitesse de réduction / mmol O₂ / min.g | vitesse d'oxydation / mmol O₂ / min.g |
|---|---|---|
| art antérieur | 0,72 ± 0,02 | 2,01 ±0.01 |
| invention, x=0,1 | 1.04±0.13 | 1,90 ±0,03 |
| invention, x=0,075 | 1,00 ± 0,14 | 1.94 ±0.03 |
| invention, x=0,05 | 1,16 ± 0,07 | 1.94 ± 0,02 |
| invention, x=0,025 | 1,01 ± 0,10 | 1,98 ±0.02 |
| invention, x=0 | 1,09 ± 0,10 | 1,98 ± 0,03 |

Les vitesses de réduction et d'oxydation sont calculées à partir des pentes liées à la perte et à la prise de masse (respectivement) observées, entre la deuxième et la troisième minute après le passage sous gaz réducteur, et moyennées sur les cinq cycles d'oxydo-réduction.

Par conséquent, la masse oxydo-réductrice selon l'invention présente une vitesse de réduction qui est respectivement supérieure de 44, 39, 61, 40 ou 51% selon que x= 0,1, 0,075. 0,05, 0,025 et 0, à celle observée avec la masse oxydo-réductrice selon l'art antérieur. La masse oxydo-réductrice selon invention présente une vitesse d'oxydation sensiblement égale à celle observée avec la masse oxydo-réductrice selon l'art antérieur quel que soit x entre 0 et 0,1.

In fine, le gain important au niveau de la vitesse de réduction obtenu avec la masse active selon l'invention compense largement la capacité de transfert en oxygène légèrement inférieure de celle-ci et une telle augmentation de la vitesse de réduction permet donc d'envisager, à iso-performance, l'utilisation d'une quantité inférieure de matériau.

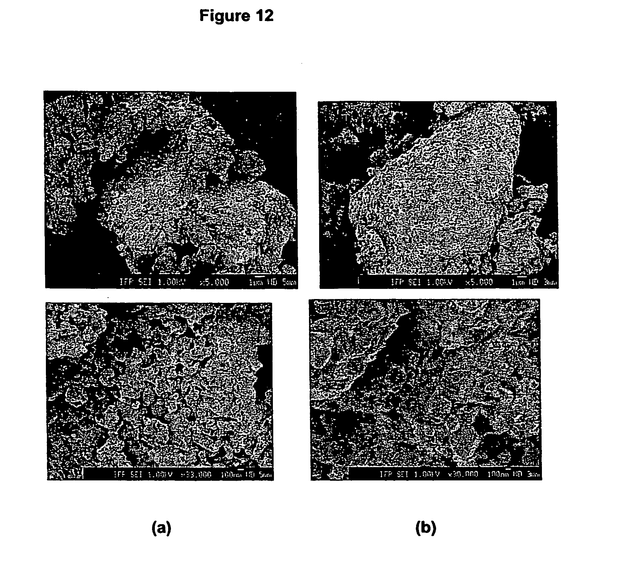

Les clichés MEB (Microscopie Electronique à Balayage) de la masse d'oxydo-réduction selon l'invention pour x=0.05 (figure 12) avant (figure 12.a) et après test (figure 12.b) sur thermobalance montrent que les particules ne se sont pas agglomérées au cours du test.

## Revendications

1. Utilisation dans un procédé d'oxydo-réduction en boucle ou procédé CLC d'une masse oxydo-réductrice contenant un spinelle répondant à la formule Gu₁₋ₓFe₁₋ₓAlO₄ avec 0≤x≤0,1.

2. Utilisation d'une masse oxydo-réductrice selon la revendication 1, pour laquelle la synthèse du spinelle est effectuée en une étape de co-précipitation.

3. Utilisation d'une masse oxydo-réductrice selon la revendication 2, pour laquelle ladite étape de co-précipitation est effectuée par co-précipitation d'un mélange de précurseurs métalliques choisis dans le groupe des nitrates, acétates et oxalates par une base.

4. Utilisation d'une masse oxydo-réductrice selon l'une des revendications précédentes dans laquelle aucun liant n'est associé.

5. Utilisation d'une masse oxydo-réductrice selon l'une des revendications 1 à 3, ladite masse étant utilisée en association avec un liant ou avec un couple ou un ensemble de couples d'oxydo-réduction, choisi dans le groupe formé par CuO/Cu, Cu₂O/Cu, NiO/Nï, Fe₂O₃/Fe₃O₄, FeO/Fe, Fe₃O₄/FeO, MnO₂/Mn₂O₃, Mn₂ZO₃/Mn₃O₄, Mn₃O₄/MnO, MnO/Mn, Co₃O₄/CoO, CoO/Co.

6. Utilisation d'une masse oxydo-réductrice selon la revendication 5, dans laquelle le liant est introduit à une teneur comprise entre 10 et 95% poids et contient de la cérine-zircone qui est soit utilisée seule, soit en mélange avec d'autres types de liants choisis dans le groupe formé par l'alumine, les aluminates de type spinelle, la silice, le dioxyde de titane, le kaolin, l' YSZ, les perovskites.

7. Utilisation d'une masse oxydo-réductrice selon la revendication 6, pour laquelle les liants autres que la cérine-zircone sont choisis dans le sous-groupe formé par l'alumine, les aluminates, l'YSZ et les perovskites.

8. Utilisation d'une masse oxydo-réductrice selon l'une des revendications précédentes, ladite masse se présentant sous forme de poudre, de billes, d'extrudés, ou de revêtement déposé sur un substrat de type monolithe.

9. Utilisation d'une masse oxydo-réductrice selon l'une quelconque des revendications précédentes, dans un procédé d'oxydo-réduction utilisant un réacteur d'oxydation et un réacteur de réduction fonctionnant tous les deux en lit circulant.

10. Utilisation d'une masse oxydo-réductrice selon l'une quelconque des revendications 1 à 8 dans un procédé d'oxydo-réduction mettant en oeuvre un réacteur rotatif.

11. Utilisation d'une masse oxydo-réductrice selon l'une quelconque des revendications 1 à 8 dans un procédé d'oxydo-réduction mettant en oeuvre un réacteur rotatif simulé.

12. Masse oxydo-réductrice, ladite masse contenant un spinelle répondant à la formule Cu₁₋ₓFe₁₋ₓAlO₄ avec 0≤x≤0,1, en association avec un liant ou avec un couple ou un ensemble de couples d'oxydo-réduction, choisi dans le groupe formé par CuO/Cu, Cu₂O/Cu, NiO/Ni, Fe₂O₃/Fe₃O₄, FeO/Fe, Fe₃O₄/FeO, MnO₂/Mn₂O₃, Mn₂O₃/Mn₃O₄, Mn₃O₄/MnO, MnO/Mn, Co₃O₄/CoO, CoO/Co.

13. Masse oxydo-réductrice selon la revendication 12, pour laquelle la synthèse du spinelle est effectuée en une étape de co-précipitation.

14. Masse oxydo-réductrice selon la revendication 13, pour laquelle ladite étape de co-précipitation est effectuée par co-précipitation d'un mélange de précurseurs métalliques choisis dans le groupe des nitrates, acétates et oxalates par une base.

15. Masse oxydo-réductrice selon l'une des revendications 12 à 14, dans laquelle le liant est introduit à une teneur comprise entre 10 et 95% poids et contient de la cérine-zircone qui est soit utilisée seule, soit en mélange avec d'autres types de liants choisis dans le groupe formé par l'alumine, les aluminates de type spinelle, la silice, le dioxyde de titane, le kaolin, l' YSZ, les perovskites.

16. Masse oxydo-réductrice selon la revendication 15, pour laquelle les liants autres que la cérine-zircone sont choisis dans le sous-groupe formé par l'alumine, les aluminates, l' YSZ et les perovskites.

17. Masse oxydo-réductrice selon l'une des revendications 12 à 16, ladite masse se présentant sous forme de poudre, de billes, d'extrudés, ou de revêtement déposé sur un substrat de type monolithe.

## Claims

1. Use, in a redox loop method or a CLC method, of a redox mass containing a spinel of formula-Cu₁₋ₓFe₁₋ₓAlO₄ with 0≤x≤0.1.

2. Use of a redox mass as claimed in claim 1, for which synthesis of the spinel is carried out in a coprecipitation stage.

3. Use of a redox mass as claimed in claim 2, for which said coprecipitation stage is carried out by coprecipitation of a mixture of metal precursors selected from the group made up of nitrates, acetates and oxalates by a base.

4. Use of a redox mass as claimed in any one of the previous claims, wherein no binder is associated.

5. Use of a redox mass as claimed in any one of claims 1 to 3, said mass being used in combination with a binder or with a redox pair or a set of redox pairs, selected from the group made up of CuO/Cu, Cu₂O/Cu, NiO/Ni, Fe₂O₃/Fe₃O₄, FeO/Fe, Fe₃O₄/FeO, MnO₂/Mn₂O₃, Mn₂O_{3/}Mn₃O₄, Mn₃O₄/MnO, MnO/Mn, Co₃O₄/CoO, CoO/Co.

6. Use of a redox mass as claimed in claim 5, wherein the binder is introduced in a proportion ranging between 10 and 95 wt.% and it contains ceria-zirconia that is used either alone or in admixture with other types of binders selected from the group made up of alumina, spinel type aluminates, silica, titanium dioxide, kaolin, YSZ, perovskites.

7. Use of a redox mass as claimed in claim 6, for which the binders other than ceria-zirconia are selected from the subgroup made up of alumina, aluminates, YSZ and perovskites.

8. Use of a redox mass as claimed in any one of the previous claims, said mass coming in form of powder, balls, extrudates, or washcoat deposited on a monolith type substrate.

9. Use of a redox mass as claimed in any one of the previous claims, in a redox method using an oxidation reactor and a reduction reactor operating both in circulating bed mode.

10. Use of a redox mass as claimed in any one of claims 1 to 8 in a redox method using a rotary reactor.

11. Use of a redox mass as claimed in any one of claims 1 to 8 in a redox method using a simulated rotary reactor.

12. A redox mass, said mass containing a spinel of formula Cu₁₋ₓFe₁₋ₓAlO₄ with 0≤x≤0.1, in combination with a binder or with a redox pair or a set of redox pairs, selected from the group made up of CuO/Cu, Cu₂O/Cu, NiO/Ni, Fe₂O₃/Fe₃O₄, FeO/Fe, Fe₃O₄/FeO, MnO₂/Mn₂O₃, Mn₂O₃/Mn₃O₄, Mn₃O_{4/}MnO, MnO/Mn, Co₃O₄/CoO, CoO/Co.

13. A redox mass as claimed in claim 12, for which synthesis of the spinel is carried out in a coprecipitation stage.

14. A redox mass as claimed in claim 13, for which said coprecipitation stage is carried out by coprecipitation of a mixture of metal precursors selected from the group made up of nitrates, acetates and oxalates by a base.

15. A redox mass as claimed in any one of claims 12 to 14, wherein the binder is introduced in a proportion ranging between 10 and 95 wt.% and it contains ceria-zirconia that is used either alone or in admixture with other types of binders selected from the group made up of alumina, spinel type aluminates, silica, titanium dioxide, kaolin, YSZ, perovskites.

16. A redox mass as claimed in claim 15, for which the binders other than ceria-zirconia are selected from the subgroup made up of alumina, aluminates, YSZ and perovskites.

17. A redox mass as claimed in any one of claims 12 to 16, said mass coming in form of powder, balls, extrudates, or washcoat deposited on a monolith type substrate.

## Patentansprüche

1. Verwendung einer Redox-Masse in einem Redox-Schleifenverfahren oder CLC-Verfahren, die einen Spinell mit der Formel Cu₁₋ₓFe₁₋ₓAlO₄ enthält, wobei gilt 0≤x≤0,1.

2. Verwendung einer Redox-Masse nach Anspruch 1, wobei die Synthese des Spinells in einem Copräzipitationsschritt durchgeführt wird.

3. Verwendung einer Redox-Masse nach Anspruch 2, wobei der Copräzipitationsschritt durch Copräzipitation eines Gemischs von metallischen Vorläufern, ausgewählt aus der Gruppe der Nitrate, Acetate und Oxalate, durch eine Base durchgeführt wird.

4. Verwendung einer Redox-Masse nach einem der vorhergehenden Ansprüche, wobei kein Bindemittel assoziiert wird.

5. Verwendung einer Redox-Masse nach einem der Ansprüche 1 bis 3, wobei die Masse in Assoziation mit einem Bindemittel oder mit einem Redox-Paar oder einer Gesamtheit von Redox-Paaren verwendet wird, ausgewählt aus der Gruppe gebildet aus CuO/Cu, Cu₂O/Cu, NiO/Ni, Fe₂O₃/Fe₃O₄, FeO/Fe, Fe₃O₄/FeO, MnO₂/Mn₂O₃, Mn₂O₃/Mn₃O4, Mn₃O₄/MnO, MnO/Mn, Co₃O₄/CoO, CoO/Co.

6. Verwendung einer Redox-Masse nach Anspruch 5, wobei das Bindemittel mit einem Gehalt im Bereich zwischen 10 und 95 Gew.-% eingeführt wird und Cerit-Zirkon enthält, das entweder allein oder als Gemisch mit anderen Arten von Bindemitteln verwendet wird, ausgewählt aus der Gruppe gebildet aus Aluminiumoxid, Aluminaten vom Typ Spinell, Siliciumdioxid, Titandioxid, Kaolin, YSZ, Perovskiten.

7. Verwendung einer Redox-Masse nach Anspruch 6, wobei die Bindemittel, die verschieden von Cerit-Zirkon sind, ausgewählt sind aus der Untergruppe gebildet aus Aluminiumoxid, Aluminaten, YSZ und Perovskiten.

8. Verwendung einer Redox-Masse nach einem der vorhergehenden Ansprüche, wobei die Masse die Form von Pulver, Kugeln, Extrudaten oder einer Beschichtung aufweist, die auf einem Substrat vom Typ Monolith abgeschieden wird.

9. Verwendung einer Redox-Masse nach irgendeinem der vorhergehenden Ansprüche in einem Redox-Verfahren, bei dem ein Oxidationsreaktor und ein Reduktionsreaktor verwendet werden, die beide mit zirkulierender Wirbelschicht arbeiten.

10. Verwendung einer Redox-Masse nach irgendeinem der Ansprüche 1 bis 8 in einem Redox-Verfahren, bei dem ein Drehreaktor verwendet wird.

11. Verwendung einer Redox-Masse nach irgendeinem der Ansprüche 1 bis 8 in einem Redox-Verfahren, bei dem ein simulierter Drehreaktor verwendet wird.

12. Redox-Masse, wobei die Masse einen Spinell mit der Formel Cu₁₋ₓFe₁₋ₓAlO₄ enthält, wobei gilt 0≤x≤0,1, in Assoziation mit einem Bindemittel oder mit einem Redox-Paar oder einer Gesamtheit von Redox-Paaren, ausgewählt aus der Gruppe gebildet aus CuO/Cu, Cu₂O/Cu, NiO/Ni, Fe₂O₃/Fe₃O₄, FeO/Fe, Fe₃O₄/FeO, MnO₂/Mn₂O₃, Mn₂O₃/Mn₃O₄, Mn₃O6/MnO, MnO/Mn, Co₃O₄/CoO, CoO/Co.

13. Redox-Masse nach Anspruch 12, wobei die Synthese des Spinells in einem Copräzipitationsschritt durchgeführt wird.

14. Redox-Masse nach Anspruch 13, wobei der Copräzipitationsschritt durch Copräzipitation eines Gemischs von metallischen Vorläufern, ausgewählt aus der Gruppe der Nitrate, Acetate und Oxalate, durch eine Base durchgeführt wird.

15. Redox-Masse nach einem der Ansprüche 12 bis 14, wobei das Bindemittel mit einem Gehalt im Bereich zwischen 10 und 95 Gew.-% eingeführt wird und Cerit-Zirkon enthält, das entweder allein oder als Gemisch mit anderen Arten von Bindemitteln verwendet wird, ausgewählt aus der Gruppe gebildet aus Aluminiumoxid, Aluminaten vom Typ Spinell, Siliciumdioxid, Titandioxid, Kaolin, YSZ, Perovskiten.

16. Redox-Masse nach Anspruch 15, wobei die Bindemittel, die verschieden von Cerit-Zirkon sind, ausgewählt sind aus der Untergruppe gebildet aus Aluminiumoxid, Aluminaten, YSZ und Perovskiten.

17. Redox-Masse nach einem der Ansprüche 12 bis 16, wobei die Masse die Form von Pulver, Kugeln, Extrudaten oder einer Beschichtung aufweist, die auf einem Substrat vom Typ Monolith abgeschieden wird.
